# EUROPEAN PATENT APPLICATION

(11) **EP 3 772 210 A1**
(43) Date of publication of application: **03.02.2021**
(21) Application number: 20188608.2
(22) Date of filing: 30.07.2020
(51) Int. Cl.: H04L 29/06, H04W 12/06

(54) **A METHOD FOR CONNECTIONS OF PEER DEVICES**

(30) Priority: 30.07.2019 TW 108126893
(71) Applicant: Walton Advanced Engineering Inc., Kaohsiung City 80681 (TW)
(72) Inventor: Yu, Hong-Chi, Kaohsiung City 80681 (TW); Chang, Mao-Ting, Kaohsiung City 80681 (TW)
(74) Representative: Cabinet Chaillot

(57) **Abstract**

The present disclosure relates to a method for connections of peer devices with features: a first peer box produces authentication information which will be saved in an authentication storage module and comprises a network location and an encryption key of the first peer box; the authentication storage module is electrically connected with a second peer box such that both the network location and the encryption key of the first peer box are received by the second peer box through the authentication information; both the network location and the encryption key of the second peer box are added into the authentication information in the authentication storage module from the second peer box; finally, the authentication storage module is electrically connected with a third peer box such that both the network locations and the encryption keys of the former peer boxes are received by the third peer box through the authentication information.

## Description

### BACKGROUND OF THE INVENTION

### 1) Field of the Invention

The present disclosure relates to a method for connections of peer devices with which a network location of a device within an internet environment for connections of multiple devices is not always derived through a server and information for new connections are quickly added between peer devices for reducing dependence on a single device.

### 2) Description of the Prior Art

Fast information collections and data sharing are considered as basic network applications in the era of 5th generation mobile network (5G) and Internet of Things (IoT) for which data exchanges have been one part of the daily life.

However, how to protect privileged information and personal privacy has been universally acknowledged as a critical issue when everybody is interested in collecting information; furthermore, data exchange/sharing during which information stability and accessibility between peers are also taken into account might be more difficult than was known before.

The patent documentations with respect to data exchange are shown as follows:

The China patent CN 104601624B discloses a method and a device for data exchanges. In the method and the device for data exchanges, the method has following features: a first user in a preset range around a second user is determined according to position information for the first user and the second user; the basic conditions with respect to a first user and a second user are updated according to behavior records of the first user and the second user; a request, from a specific first user or a specific second user amongst associated users and with the type based on basic conditions of the first user and/or the second user, for data exchanges between the specific first user and the specific second user is received; data is exchanged between the specific first user and the specific second user according to the type for a request. In China patent CN 104601624B, data exchanges refer to users' information such as positions and basic conditions, both of which are combined with each other, for more successful data exchanges and better user experiences.

R.O.C. patent TW 1604404 discloses a digital log exchange system with a function to pair partners comprises a first-end device, a plurality of second-end devices and a server. The first-end device is used to receive first personal data; the server provides a corresponding second-end device with a list for paired partners according to the first personal data. When an approval signal is received by the second-end device, the first-end device and a corresponding second-end device is paired in the server for execution of a procedure to exchange data of digital logs between the first-end device and the second-end device. Accordingly, a partner candidate with respect to the second-end device is paired with a child through the first-end device for data exchanges of digital logs after completion of pairing approved by the partner candidate. The digital log exchange system with a function to pair partners as shown in TW 1604404 contributes to sharing a child's and his/her partner's learning for promotion of learning effect.

R.O.C. patent TW 1559230 discloses a method of data exchange by using a two-dimensional barcode for data exchanges between a first device in which first data is saved and a second device in which second data is saved. The data exchanges executed in the first device comprises steps as follows: a first two-dimensional barcode complied from the first data is transmitted and a second two-dimensional barcode from the second device is detected; the second two-dimensional barcode which has been detected is captured and explained for receiving the second data; the second data is saved and the first data is deleted.

However, a process of data exchanges is still defective because of a server indispensable for interconnections of peer devices and two-dimensional barcodes restricted to applications between two devices mostly. Accordingly, a method for connections of peer devices provided in the present disclosure is to settle the above problems.

### SUMMARY OF THE INVENTION

In virtue of the above problems, a method for connections of peer devices is provided in the present disclosure for exchanges of network information and encryption keys among several peer devices based on authentication information.

Accordingly, a method for connections of peer devices in the present disclosure is to set up personal privacy information by multiple peer devices without a requirement for a dedicated server used in determining any network location.

A method for connections of peer devices in the present disclosure is to facilitate a configuration process by means of an authentication storage module adopted popularly which can be a Quick Response Code or an external storage device.

A method for connections of peer devices in the present disclosure is to enhance safety and accessibility of information for multiple peer devices by addition of the information to an authentication storage module sequentially.

A method for connections of peer devices in the present disclosure is to re-update information for multiple peer devices, each of which was offline, through the internet.

A method for connections of peer devices in the present disclosure is to complete a trading behavior by each of peer boxes through a financial institution certification which has linked the peer box.

To this end, a method for connections of peer devices is embodied according to the following technical measures. A method for connections of peer devices in the present disclosure comprises steps as follows: step a: a peer box produces authentication information which will be saved in an authentication storage module and comprises a network location and an encryption key of the peer box; step b: the authentication storage module is electrically connected with another peer box such that both the network location and the encryption key of the former peer box in step a are received by the latter peer box through the authentication information; step c: both the network location and the encryption key of the latter peer box in step b are added into the authentication information in the authentication storage module from the latter peer box; step d: the authentication storage module is electrically connected with a further peer box such that both the network locations and the encryption keys of the two former peer boxes are received by the further peer box through the authentication information.

A method for connections of peer devices in the present disclosure is further embodied according to the following steps technically.

A method for connections of peer devices wherein the authentication storage module can be a Quick Response Code or an external storage device.

A method for connections of peer devices wherein both a network location and an encryption key of a peer box are added into the authentication information in the authentication storage module from the peer box after step d.

A method for connections of peer devices wherein both a network location and an encryption key of a latter peer box are simultaneously received by a former peer box, which links the latter peer box through the internet, during step b.

A method for connections of peer devices wherein both a network location and an encryption key of a further peer box are simultaneously received by the former peer boxes, which link the further peer box through the internet, during step d.

A method for connections of peer devices wherein information is transmitted among peer boxes through the internet after step d.

A method for connections of peer devices wherein a connection to the internet by each of peer boxes which was offline is resumed according to the authentication information after step d.

A method for connections of peer devices wherein each of peer boxes links a financial institution certification through which a transaction behavior is completed in the peer box.

A method for connections of peer devices wherein both network locations and encryption keys of peer boxes are received by each of peer boxes again, which was offline early and has been reconnected to the internet later.

In contrast to conventional techniques, a method for connections of peer devices in the present disclosure proves effective in: (1) setting up personal privacy information by multiple peer devices without a requirement for a dedicated server used in determining any network location; (2) enhancing safety and accessibility of information for multiple peer devices by addition of the information to an authentication storage module sequentially; (3) linking each of peer boxes and a financial institution certification through which a transaction behavior is completed in each of the peer boxes for supply of different types of financial services.

### BRIEF DESCRIPTIONS OF THE DRAWINGS

FIG. 1 is the first flowchart about a method for connections of peer devices in the first embodiment;

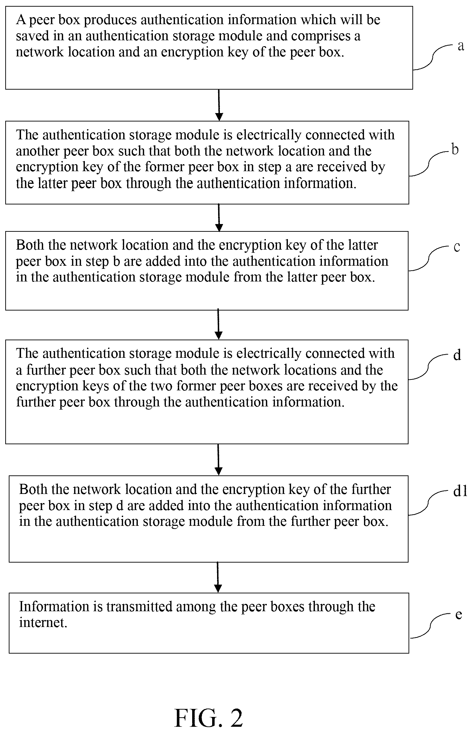

FIG. 2 is the second flowchart about a method for connections of peer devices in the first embodiment;
FIG. 3 is the flowchart about a method for connections of peer devices in the second embodiment;
FIG. 4 is the flowchart about a method for connections of peer devices in the third embodiment;
FIG. 5a is the first schematic view of a method for connections of peer devices in a preferred embodiment;
FIG. 5b is the second schematic view of a method for connections of peer devices in a preferred embodiment;
FIG. 5c is the third schematic view of a method for connections of peer devices in a preferred embodiment;
FIG. 5d is the fourth schematic view of a method for connections of peer devices in a preferred embodiment;
FIG. 5e is the fifth schematic view of a method for connections of peer devices in a preferred embodiment;
FIG. 6a is the sixth schematic view of a method for connections of peer devices in a preferred embodiment;
FIG. 6b is the seventh schematic view of a method for connections of peer devices in a preferred embodiment;
FIG. 6c is the eighth schematic view of a method for connections of peer devices in a preferred embodiment;
FIG. 6d is the ninth schematic view of a method for connections of peer devices in a preferred embodiment;
FIG. 7 is the tenth schematic view of a method for connections of peer devices in a preferred embodiment.

### DETAILED DESCRIPTIONS OF THE PREFERRED EMBODIMENTS

A method for connections of peer devices is explained in the preferred embodiments for clear understanding of purposes, characteristics and effects of the present disclosure.

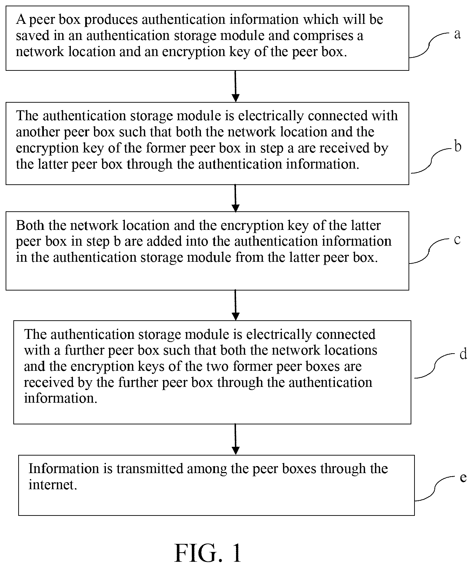

First, referring to FIG. 1a, which illustrates a method for connections of peer devices in the first embodiment comprises step a (a), step b (b), step c (c), step d (d) and step e (e).

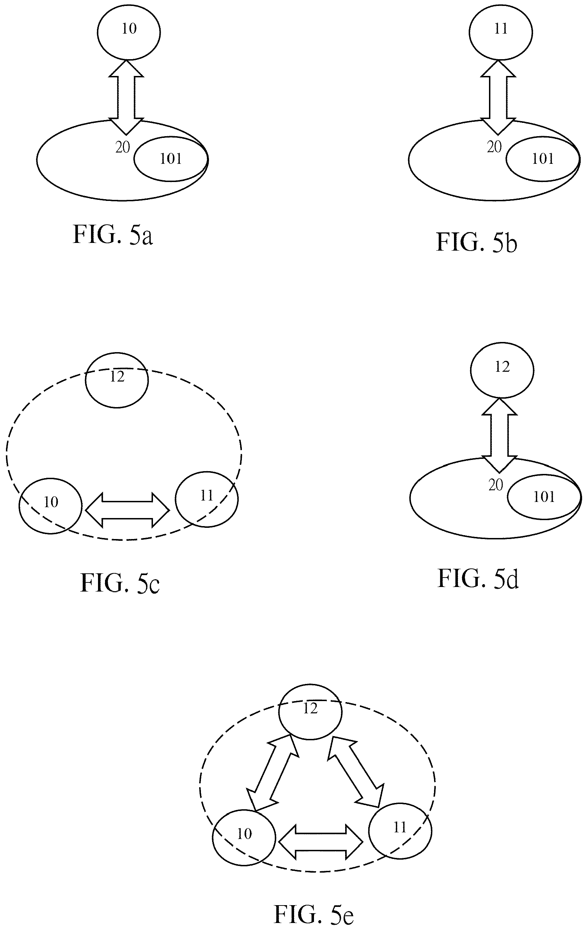

Referring to FIG. 1 for step a (a) and FIG. 5a, which illustrate a peer box 10 produces authentication information 101 which will be saved in an authentication storage module 20 and comprises a network location and an encryption key of the peer box 10 during step a (a).

Specifically, the peer box 10 is a hardware device to connect the internet, read stored digital data, execute encryption/decryption algorithms, and run according to a built-in operating system; the authentication information 101 encrypted for saving both the network location and the encryption key of the peer box 10 is an effective source from which information for data storages is provided and a network location to be electrically connected is quickly received and combined with the encryption key legally to increase other correlated information later; the authentication storage module 20 is a Quick Response Code or an external storage device wherein the Quick Response Code is a two-dimensional barcode, which is critically acclaimed for its faster reading function and larger data storage capacity than those of an ordinary one-dimensional barcode but not aligned with a scanner compared with a one-dimensional barcode, and the external storage device can be a USB flash drive, which is an easily portable and compact device with a USB interface for data storages based on flash memories.

Next, referring to FIG. 1 for step b (b) and FIG. 5b, which illustrate the authentication storage module 20 is electrically connected with another peer box 11 such that both the network location and the encryption key of the peer box 10 are received by the peer box 11 through the authentication information 101 during step b (b).

In a method for connections of peer devices, the peer box 11 which is identical to the peer box 10 in step a (a) is able to access the authentication storage module 20 according to a Quick Response Code or an external storage device correspondingly and further receive the network location and the encryption key of the peer box 10 through the authentication storage module 20.

Furthermore, referring to FIG. 1 for step c (c) and FIG. 5b, which illustrate both the network location and the encryption key of the peer box 11 are added into the authentication information 101 in the authentication storage module 20 from the peer box 11 during step c (c).

As shown in FIG. 5c, the peer box 10 and the peer box 11 are electrically connected with each other through the internet. For the network location and the encryption key of the former peer box 10 as well as the network location and the encryption key of the latter peer box 11 received by any device newly added through the authentication information 101, both the network location and the encryption key of the peer box 11 are added into authentication information 101 during step c (c).

Furthermore, referring to FIG. 1 for step d (d) and FIG. 5d, which illustrate the authentication storage module 20 is electrically connected with a further peer box 12 such that both the network locations and the encryption keys of the peer boxes 10, 11 are received by the peer box 12 through the authentication information 101 during step d (d).

In a method for connections of peer devices, the peer box 12 which is identical to the peer box 10 in step a (a) is able to access the authentication storage module 20 according to a Quick Response Code or an external storage device correspondingly and further receive the network locations and the encryption keys of the peer boxes 10, 11 through the authentication storage module 20.

Finally, referring to FIG. 1 for step e (e) and FIG. 5e, which illustrate information is transmitted among the peer boxes 10, 11, 12 through the internet in step e (e) after step d (d).

As shown in FIG. 5e, the peer box 10, the peer box 11 and the peer box 12 are electrically connected with one another through the internet for data transmission and message sharing.

Preferably, step d1 (d1) which can be added after step d (d) is used to add both the network location and the encryption key of the peer box 12 into the authentication information 101 in the authentication storage module 20 from the peer box 12. Based on this concept, a network location and an encryption key of each peer box can be added into the authentication information 101 in the authentication storage module 20 to ensure information transmission from a peer box to any newly-added device through the internet.

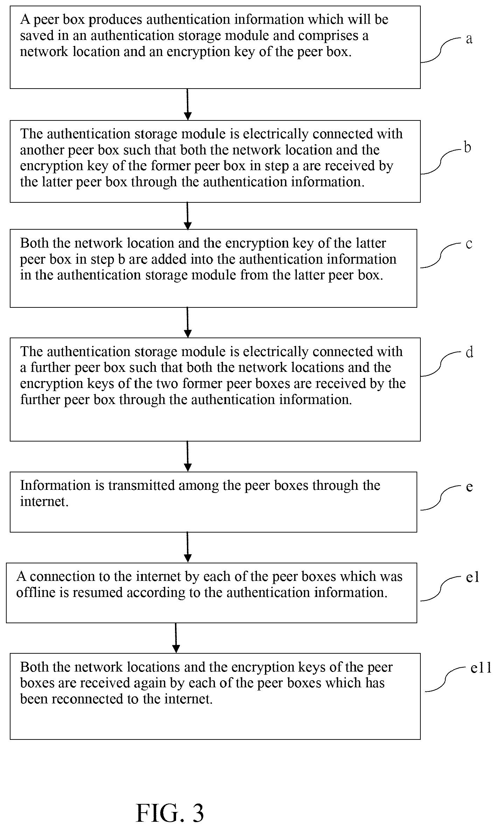

Referring to FIG. 3, which is a flowchart about a method for connections of peer devices in the second embodiment in which the characteristics identical to those of the first embodiment in FIGS. 5a, 5b, 5c, 5d and 5e are not explained hereinafter. The differences in the second embodiment differing from the first embodiment are step e1 (e1), step e11 (e11) and step e12 (e12) after step e (e) in the first embodiment.

Referring to FIG. 3, which illustrates a flowchart for the second embodiment comprises step a (a), step b (b), step c (c), step d (d), step e (e), step e1 (e1), step e11 (e11) and step e12 (e12).

First, referring to FIG. 3 for step a (a) and FIG. 5a, which illustrate a peer box 10 produces authentication information 101 which will be saved in an authentication storage module 20 and comprises a network location and an encryption key of the peer box 10 during step a (a).

Next, referring to FIG. 3 for step b (b) and FIG. 5b, which illustrate the authentication storage module 20 is electrically connected with another peer box 11 such that both the network location and the encryption key of the peer box 10 are received by the peer box 11 through the authentication information 101 during step b (b).

Furthermore, referring to FIG. 3 for step c (c) and FIG. 5b, which illustrate both the network location and the encryption key of the peer box 11 are added into the authentication information 101 in the authentication storage module 20 from the peer box 11 during step c (c).

Furthermore, referring to FIG. 3 for step d (d) and FIG. 5b, which illustrate the authentication storage module 20 is electrically connected with a further peer box 12 such that both the network locations and the encryption keys of the peer boxes 10, 11 are received by the peer box 12 through the authentication information 101 during step d (d).

Next, referring to FIG. 3 for step e (e) and FIG. 5e, which illustrate information is transmitted among the peer boxes 10, 11, 12 through the internet in step e (e) after step d (d).

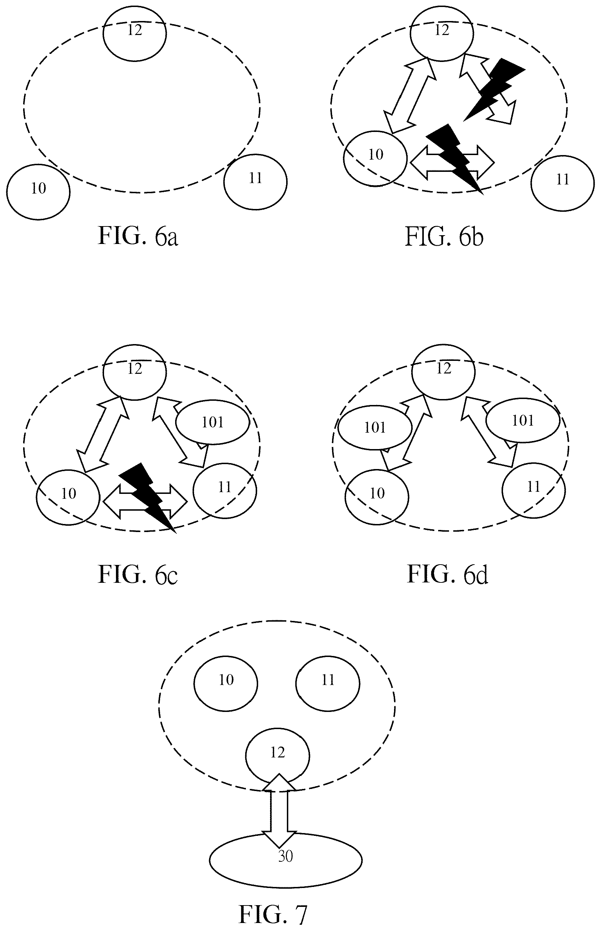

As shown in step e1 (e1) added after step e (e), a connection to the internet by each of the peer boxes 10, 11, 12 which was offline (FIG. 6a) is resumed according to the authentication information 101.

In practice, the network location and the encryption key of the peer box (10) are known to the peer boxes 11, 12 according to the saved authentication information 101; accordingly, when the network location of the peer box 10 is unchanged, information is still transmitted among the peer boxes 10, 11, 12 or from the peer box 10 to the peer boxes 11, 12 through the internet, as shown in FIG. 5e.

After that, step e11 (e11) following step e1 (e1) is used to receive the network locations and the encryption keys of the peer boxes 10, 11, 12 again by each of the peer boxes 10, 11, 12 which has been reconnected to the internet.

Specifically, when the network location for each of the peer boxes 11, 12, which were offline as shown in FIG. 6a, is changed, both the network location and the encryption key of the peer box 10 will be notified through the authentication information 101, as shown in FIG. 6b that the peer box 10 with its online status resumed early and the peer box 12 are electrically connected with each other again according to the authentication information 101 but the peer box 11 is kept offline. However, as shown in FIG. 6c, the peer box 11 with its network location changed is electrically reconnected with the peer box 12 such that both the network location and the encryption key of the peer box 12 are provided again through the authentication information 101. Finally, as shown in FIG. 6d, the status in FIG. 5e is resumed with the authentication information 101 exchanged between two peer devices.

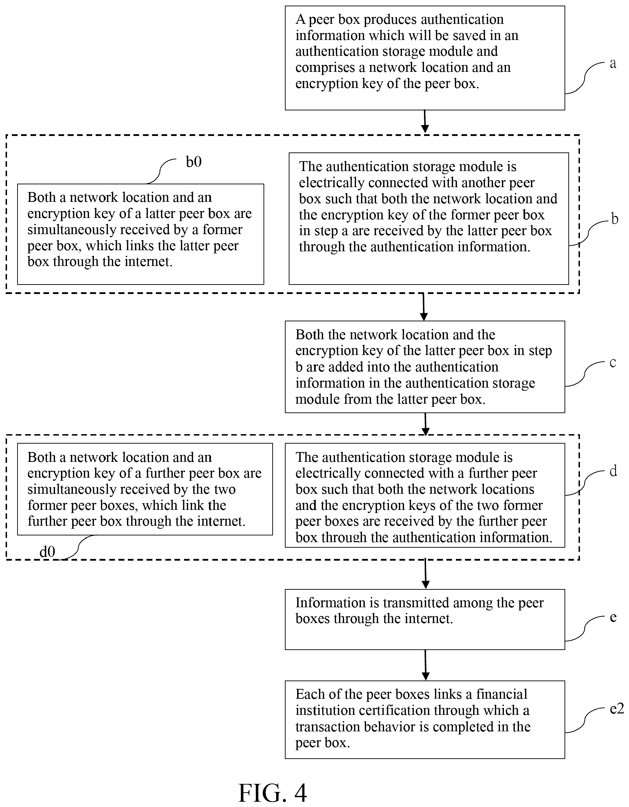

Referring to FIG. 4, which is a flowchart about a method for connections of peer devices in the third embodiment in which the characteristics identical to those of the first and second embodiments in FIGS. 5a, 5b, 5c, 5d, 5e, 6a, 6b, 6c and 6d are not explained hereinafter. The differences in the third embodiment differing from the first embodiment are step b (b) in the first embodiment accompanied by step b0 (b0), step d (d) in the first embodiment accompanied by step d0 (d0), and step e (e) in the first embodiment followed by step e2 (e2).

Referring to FIG. 4, which is the flowchart for the third embodiment comprising step a (a), step b (b), step b0 (b0), step c (c), step d (d), step d0 (d0), step e (e) and step e2 (e2).

First, referring to FIG. 4 for step a (a) and FIG. 5a, which illustrate a peer box 10 produces authentication information 101 which will be saved in an authentication storage module 20 and comprises a network location and an encryption key of the peer box 10 during step a (a).

Next, referring to FIG. 4 for step b (b) and FIG. 5b, which illustrate the authentication storage module 20 is electrically connected with another peer box 11 such that both the network location and the encryption key of the peer box 10 are received by the peer box 11 through the authentication information 101 during step b (b).

With step b (b) enabled, step b0 (b0) is executed simultaneously such that both the network location and the encryption key of the peer box 11 are received by the peer box 10 which links the peer box 11 through the internet during step b0 (b0).

In step b0 (b0), a peer-to-peer relation rather than a host-slave relation exists between the peer box 10 and the peer box 11 in the internet environment.

Furthermore, referring to FIG. 4 for step c (c) and FIG. 5b, which illustrate both the network location and the encryption key of the peer box 11 are added into the authentication information 101 in the authentication storage module 20 from the peer box 11 during step c (c)

Furthermore, referring to FIG. 4 for step d (d) and FIG. 5d, which illustrate the authentication storage module 20 is electrically connected with a further peer box 12 such that both the network locations and the encryption keys of the peer boxes 10, 11 are received by the peer box 12 through the authentication information 101 during step d (d).

With step d (d) enabled, step d0 (d0) is executed simultaneously such that both the network location and the encryption key of the peer box 12 are received by the peer boxes 10, 11, which have linked the peer box 12 through the internet, during step d0 (d0).

In step d0 (d0), peer-to-peer relations rather than host-slave relations exist among the peer box (10), the peer box (11) and the peer box (12) in the internet environment.

Next, referring to FIG. 4 for step e (e) and FIG. 5e, which illustrate information is transmitted among the peer boxes 10, 11, 12 through the internet in step e (e) after step d (d).

Finally, referring to FIG. 4 for step e2 (e2) and FIG. 7, which illustrate each of the peer boxes 10, 11, 12 links a financial institution certification 30 through which a transaction behavior is completed in each of the peer boxes 10, 11, 12 during step e2 (e2).

During step e2 (e2), a financial service between a plurality of peer boxes 10, 11, 12 and a financial institution certification 30 is completed with the peer box 12 and the financial institution certification 30 linking each other, as shown in FIG. 7.

Accordingly, a method for connections of peer devices which is different from other conventional peer devices and referred to as creative work in applications of device connectivity meets patentability and is applied for the patent.

It should be reiterated that the above descriptions present the preferred embodiments, and any equivalent changes in specifications, claims or drawings still belongs to the technical field within the present disclosure with reference to claims hereinafter.

## Claims

1. A method for connections of peer devices, comprising:
step a: a peer box produces authentication information which will be saved in an authentication storage module and comprises a network location and an encryption key of the peer box;
step b: the authentication storage module is electrically connected with another peer box such that both the network location and the encryption key of the former peer box in step a are received by the latter peer box through the authentication information;
step c: both the network location and the encryption key of the latter peer box in step b are added into the authentication information in the authentication storage module from the latter peer box;
step d: the authentication storage module is electrically connected with a further peer box such that both the network locations and the encryption keys of the two former peer boxes are received by the further peer box through the authentication information.

2. The method as claimed in claim 1 wherein the authentication storage module can be a Quick Response Code or an external storage device.

3. The method as claimed in claim 1 wherein both a network location and an encryption key of a peer box are added into the authentication information in the authentication storage module from the peer box after step d.

4. The method as claimed in claim 1 wherein both a network location and an encryption key of a latter peer box are simultaneously received by a former peer box, which links the latter peer box through the internet, during step b.

5. The method as claimed in claim 1 wherein both a network location and an encryption key of a further peer box are simultaneously received by the former peer boxes, which link the further peer box through the internet, during step d.

6. The method as claimed in claim 1 wherein information is transmitted among peer boxes through the internet after step d.

7. The method as claimed in claim 1 wherein a connection to the internet by each of peer boxes which was offline is resumed according to the authentication information after step d.

8. The method as claimed in claim 1 wherein each of peer boxes links a financial institution certification through which a transaction behavior is completed in the peer box.

9. The method as claimed in claim 7 wherein both network locations and encryption keys of peer boxes are received by each of peer boxes again, which was offline early and has been reconnected to the internet later.
